# EUROPÄISCHE PATENTSCHRIFT

(11) **EP 2 654 183 B1**
(45) Veröffentlichungstag und Bekanntmachung des Hinweises auf die Patenterteilung: **02.11.2016**
(21) Anmeldenummer: 12164903.2
(22) Anmeldetag: 20.04.2012
(51) Int. Cl.: H02K 3/52

(54) **Verschaltungseinrichtung für einen Elektromotor**
Wiring device for an electric motor
Dispositif de commutation pour un moteur électrique

(43) Veröffentlichungstag der Anmeldung: 23.10.2013
(73) Patentinhaber: ebm-papst Mulfingen GmbH & Co. KG, 74673 Mulfingen (DE)
(72) Erfinder: Riegler, Peter, Dipl.-Ing (FH), 97944 Boxberg (DE); Heli, Thomas, Dipl.-Ing (FH), 74595 Langenburg (DE); Hofmann, Walter, Dipl.-Ing (FH), 74673 Mulfingen - Ailringen (DE); Oesterle, Stephan, 74211 Leingarten (DE)
(74) Vertreter: Peter, Julian

(56) Entgegenhaltungen:
- EP-A2- 0 213 863
- DE-A1- 19 842 170
- DE-U1- 20 004 185

## Beschreibung

Die vorliegende Erfindung betrifft gemäß dem Oberbegriff des Anspruchs 1 eine Verschaltungseinrichtung zum elektrischen Verbinden von Wicklungsdrahtenden eines Stators eines Elektromotors mit äußeren Anschlussleitern, bestehend aus einer zu einer Motorachse senkrecht auf einer Stirnseite des Stators anzuordnenden Schaltscheibe mit Kontakthalterungen für elektrische Kontaktelemente, wobei die Kontaktelemente einerseits mit den Anschlussleitern verbunden oder verbindbar sind sowie andererseits durch Aufsetzen der Schaltscheibe auf den Stator mit an dem Stator angeordneten und mit den Wicklungsdrahtenden verbundenen Gegenkontakten zusammensteckbar sind.

Das Dokument DE 20 2006 012 075 U1 beschreibt einen Stator mit einer solchen Verschaltungseinrichtung in Form einer senkrecht zur Motorachse an dem Stator angeordneten Schaltscheibe. Als Kontaktelemente trägt die Schaltscheibe Leiterbahnen, die als einstückige Stanzbiegeteile ausgebildet sind, und die einerseits Wicklungsenden der Statorwicklungen kontaktieren und andererseits mit Anschlussleitungen verbindbar sind.

Ähnliche Verschaltungseinrichtungen sind in den Dokumenten EP 0 727 864 A2 und DE 200 04 185 U1 beschrieben, wobei die jeweilige Schaltscheibe zusätzlich eine Halterung für einen so genannten Temperaturwächter aufweist.

Bei den bekannten Verschaltungseinrichtungen sind jeweils die Schaltscheiben speziell nur für einen bestimmten Elektromotor konzipiert, wobei allenfalls durch unterschiedliche Ausbildung und/oder Anordnung der Kontaktelemente eine Änderung der Motor-Laufrichtung vorgenommen werden kann.

Der vorliegenden Erfindung liegt die Aufgabe zu Grunde, eine Verschaltungseinrichtung der beschriebenen, gattungsgemäßen Art so zu verbessern, dass eine erhöhte Einsatz-Variabilität erreicht wird.

Erfindungsgemäß wird dies durch die Merkmale des unabhängigen Anspruchs 1 erreicht. Vorteilhafte Ausgestaltungsmerkmale sind in den abhängigen Ansprüchen sowie in der anschließenden Beschreibung enthalten. Zudem ist ein mit der erfindungsgemäßen Verschaltungseinrichtung ausgestatteter Stator Gegenstand des Anspruchs 17, und ein Elektromotor mit der erfindungsgemäßen Verschaltungseinrichtung ist Gegenstand des Anspruchs 18, wobei es sich insbesondere um einen Außenläufermotor handelt.

Somit ist erfindungsgemäß vorgesehen, dass die Schaltscheibe mindestens zwei hinsichtlich ihrer Anordnung auf der Fläche der Schaltscheibe verschiedene Gruppen von Kontakthalterungen derart aufweist, dass die Schaltscheibe mit in die Kontakthalterungen einer ersten Gruppe eingesetzten Kontaktelementen auf einen ersten Stator-Typ und mit in die Kontakthalterungen einer zweiten Gruppe eingesetzten Kontaktelementen auf einen zweiten Stator-Typ zur Kontaktierung der jeweiligen Gegenkontakte des Stators aufsetzbar ist. Grundsätzlich können auch drei oder mehr Gruppen von Kontakthalterungen in Anpassung an eine entsprechende Anzahl von verschiedenen Stator-Typen gebildet sein, sofern die dazu insgesamt erforderlichen Kontakthalterungen auf der zur Verfügung stehenden Fläche der Schaltscheibe untergebracht werden können. Dies bedeutet, dass die Anordnung der einzelnen Kontakthalterungen der jeweiligen Gruppe an die Anordnung der Stator-Gegenkontakte des jeweiligen Stator-Typs angepasst ist. Dadurch kann ein und dieselbe Schaltscheibe für mindestens zwei verschiedene Stator-Typen verwendet werden, indem lediglich die jeweils zugehörige Gruppe der Kontakthalterungen mit den erforderlichen Kontaktelementen bestückt wird. Die übrigen Kontakthalterungen der anderen Gruppe bzw. Gruppen bleiben dann frei und ungenutzt.

In bevorzugter Ausgestaltung der Erfindung weist jede Kontakthalterung auf einer Bestückungsseite der Schaltscheibe eine Halteaufnahme zum Einsetzen des jeweiligen Kontaktelementes und auf der anderen, gegenüberliegenden Steckseite eine Durchführöffnung für den zugehörigen Stator-Gegenkontakt auf, wobei die Stator-Gegenkontakte als axial vorstehende Steckerstifte ausgebildet sind. Hierbei sind zudem zwei Gruppen der Kontakthalterungen derart axial umgekehrt an der Schaltscheibe gebildet, dass die Schaltscheibe durch entsprechendes Wenden und mit der jeweiligen Kontakt-Bestückung in einer ihrer zwei möglichen, zur Motorachse senkrechten Ausrichtungen auf den jeweiligen Stator-Typ und dessen Gegenkontakte aufsetzbar ist. Somit kann die erfindungsgemäße Schaltscheibe auch als "Wende-Schaltscheibe" bezeichnet werden.

In weiterer vorteilhafter Ausgestaltung der Erfindung ist ein kappenartiges, die Schaltscheibe überdeckendes Abdeckteil vorgesehen, welches unter Einschluss der Schaltscheibe an dem jeweiligen Stator befestigbar ist. Bevorzugt erfolgt die Befestigung über am Außenumfang verteilt angeordnete Schraubverbindungen. Zweckmäßig weist dabei das Abdeckteil auf seiner von der Schaltscheibe wegweisenden Außenseite einen axialen, zentrischen, einstückig angeformten Steckansatz zum Einstecken in eine im Querschnitt angepasste Aufnahmeöffnung eines elastischen Dämpferelementes auf. Somit wird der Stator zur Schwingungsdämpfung ortsfest und in Rotationsrichtung zur Drehmomentaufnahme abgestützt über den Steckansatz in dem Dämpferelement gehalten.

Anhand von in der Zeichnung veranschaulichten, bevorzugten Ausführungsbeispielen soll die Erfindung im Folgenden weitergehend erläutert werden. Es zeigen:

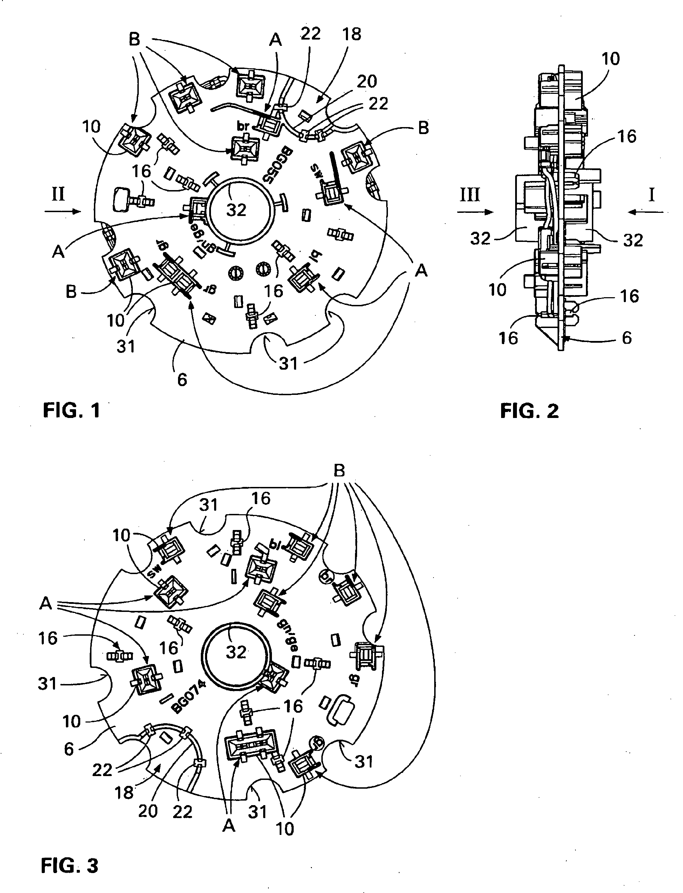

- Fig. 1: eine Schaltscheibe der erfindungsgemäßen Verschaltungseinrichtung in einer Draufsicht auf eine ihrer zwei Seiten (Ansicht in Pfeilrichtung I gemäß Fig. 2) und in einer noch nicht mit Kontaktelementen bestückten Ausführung,
- Fig. 2: eine Seitenansicht der Schaltscheibe in Pfeilrichtung II gemäß Fig. 1,
- Fig. 3: eine Draufsicht in Pfeilrichtung III gemäß Fig. 2 auf die andere Seite der Schaltscheibe,
- Fig. 4: eine Ansicht analog zu Fig. 1 in einer mit Kontaktelementen und Anschlussleitern bestückten Ausführung für einen ersten Stator-Typ,
- Fig. 5: eine Ansicht analog zu Fig. 3 in einer entsprechend bestückten Ausführung für einen zweiten Stator-Typ,
- Fig. 6: eine perspektivische Explosionsdarstellung des ersten Stator-Typs mit einer zugehörigen erfindungsgemäßen Verschaltungseinrichtung in der Bestückung gemäß Fig. 4,
- Fig. 7: eine perspektivische Explosionsdarstellung des zweiten Stator-Typs mit einer erfindungsgemäßen Verschaltungseinrichtung in der Bestückung gemäß Fig. 5 und
- Fig. 8: einen diametralen Axialschnitt durch den vormontierten Stator beispielhaft in der Ausführung gemäß Fig. 7.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

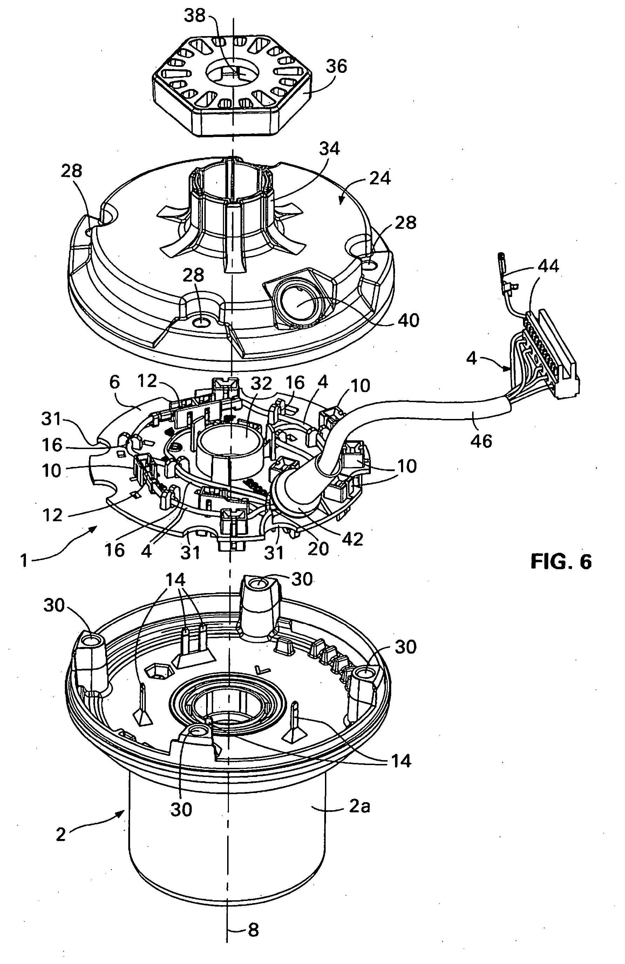

Wie sich zunächst aus Fig. 6 bis 8 ergibt, dient eine erfindungsgemäße Verschaltungseinrichtung 1 zum elektrischen Verbinden von in den Zeichnungen nicht erkennbaren Wicklungsdrahtenden eines Stators 2 eines Elektromotors mit äußeren Anschlussleitern 4. Die Verschaltungseinrichtung 1 besteht aus einer flachen Schaltscheibe 6, die bezüglich ihrer Scheibenebene in einer zu einer Motorachse 8 senkrechten Ausrichtung auf einer Stirnseite des Stators 2 diesen bzw. einen so genannten Wickelkopf überdeckend anzuordnen ist. Die Schaltscheibe 6 weist Kontakthalterungen 10 für elektrische Kontaktelemente 12 auf. Diese Kontaktelemente 12 sind einerseits mit den Anschlussleitern 4 verbunden oder verbindbar sowie andererseits durch Aufsetzen der Schaltscheibe 6 auf den Stator 2 mit an dem Stator 2 angeordneten und mit den Wicklungsdrahtenden verbundenen Gegenkontakten 14 zusammensteckbar. Dabei sind die Gegenkontakte 14 gemäß Fig. 6 bis 8 bevorzugt als axial bzw. achsparallel ausgerichtete Steckerstifte ausgebildet, wobei die Kontaktelemente 12 als korrespondierende Steckbuchsenkontakte zur Aufnahme der einzusteckenden Gegenkontakte 14 ausgebildet sind.

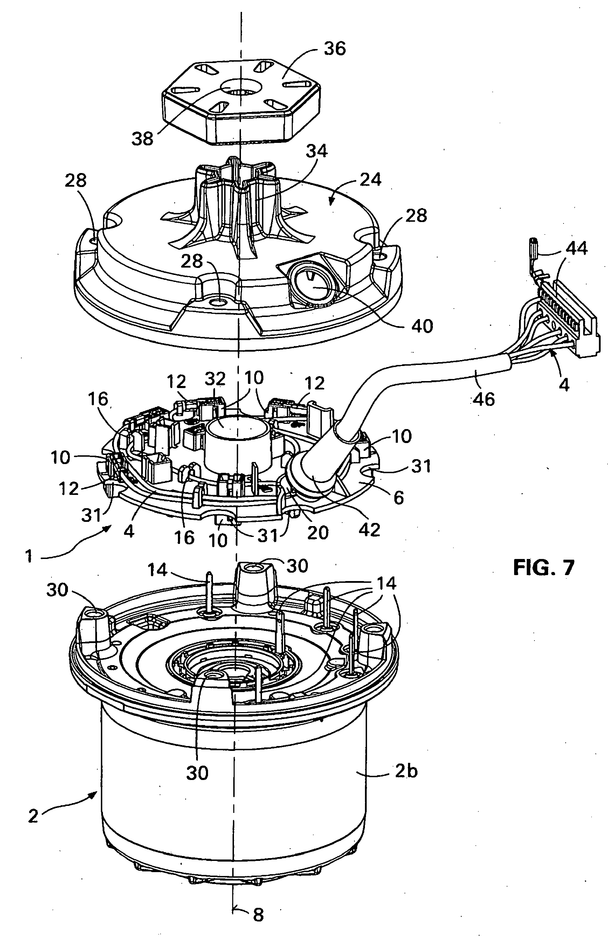

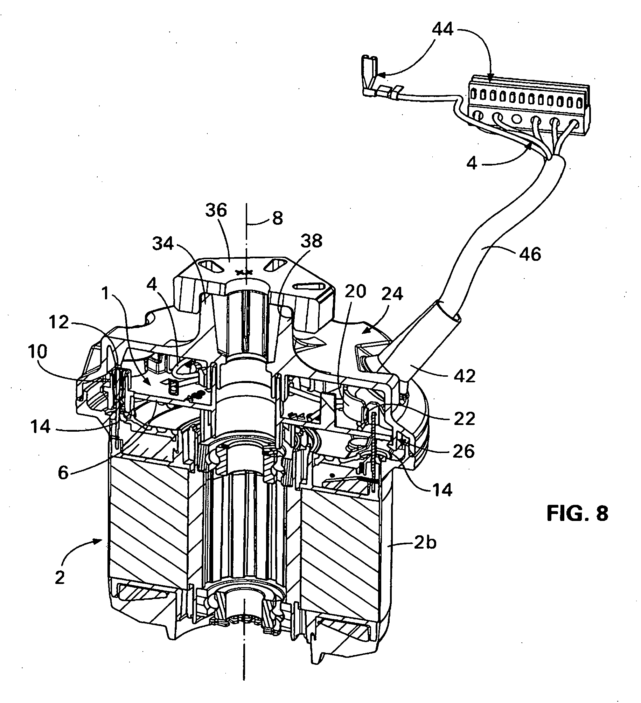

Erfindungsgemäß ist hierbei vorgesehen, dass die Schaltscheibe 6 (mindestens) zwei hinsichtlich ihrer Anordnung auf der Fläche der Schaltscheibe 6 verschiedene Gruppen A und B von Kontakthalterungen 10 derart aufweist, dass die Schaltscheibe 6 mit in die Kontakthalterungen 10 einer ersten Gruppe A eingesetzten Kontaktelementen 12 auf einen ersten Stator-Typ 2a - siehe Fig. 6 - und mit in die Kontakthalterungen 10 einer zweiten Gruppe B eingesetzten Kontaktelementen 12 auf einen zweiten Stator-Typ 2b - siehe Fig. 7 und 8 - zur Kontaktierung der jeweiligen Gegenkontakte 14 des jeweiligen Stators 2a bzw. 2b aufsetzbar ist. Dazu ist die Anordnung der einzelnen Kontakthalterungen 10 der jeweiligen Gruppe A bzw. B an die Anordnung der Stator-Gegenkontakte 14 des jeweiligen Stator-Typs 2a bzw. 2b angepasst. Dadurch kann dieselbe Schaltscheibe 6 auf zwei verschiedene Arten mit den erforderlichen Kontaktelementen 12 bestückt werden, wobei entweder die Kontakthalterungen 10 der Gruppe A entsprechend dem Stator 2a und der Anordnung von dessen Gegenkontakten 14 mit den erforderlichen Kontaktelementen 12 bestückt werden, oder es werden die Kontakthalterungen 10 der zweiten Gruppe B entsprechend bestückt. Die jeweils übrigen Kontakthalterungen 10 der anderen, jeweils nicht verwendeten Gruppe B oder A bleiben frei und ungenutzt.

Jede Kontakthalterung 10 weist auf einer Seite der Schaltscheibe 6 eine Halteaufnahme zum fixierten Einsetzen des jeweiligen Kontaktelementes 12 und auf der anderen, gegenüberliegenden Seite eine Durchführöffnung für den zugehörigen Stator-Gegenkontakt 14 auf.

Hierbei ist in bevorzugter Ausgestaltung der Erfindung vorgesehen, dass die Schaltscheibe 6 als "Wende-Schaltscheibe" ausgebildet ist. Dazu sind die Kontakthalterungen 10 der beiden Gruppen A und B derart axial umgekehrt an der Schaltscheibe 6 gebildet, dass die Schaltscheibe 6 durch entsprechendes Wenden und mit der jeweiligen Kontakt-Bestückung in einer ihrer zwei möglichen, zur Motorachse 8 senkrechten Ausrichtungen auf den jeweiligen Stator-Typ 2a oder 2b und dessen Gegenkontakte 14 aufsetzbar ist.

In bevorzugter Ausgestaltung sind die Kontaktelemente 12 mit den jeweiligen Anschlussleitern 4 elektrisch fest, unlösbar verbunden, insbesondere vercrimpt.

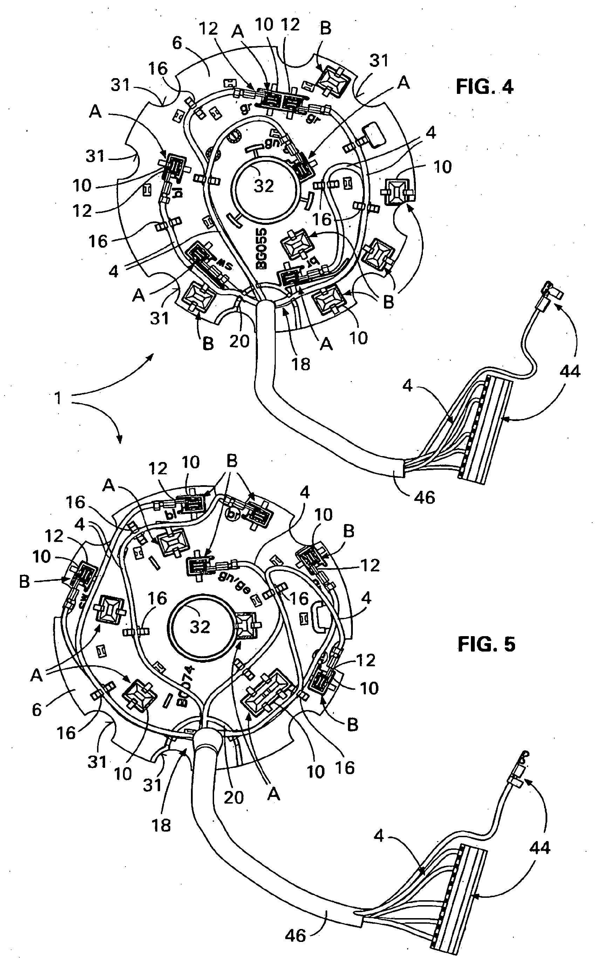

Es ist weiterhin zweckmäßig, wenn die Schaltscheibe 6 auf ihren beiden gegenüberliegenden Oberflächen schlitzartige Halteaufnahmen 16 zum fixierenden Einlegen der Anschlussleiter 4 in ihrem Verlauf zwischen einem gemeinsamen peripheren Zuführbereich 18 und den die jeweiligen Kontaktelemente 12 aufnehmenden Kontakthalterungen 10 aufweist. Weiterhin kann die Schaltscheibe 6 mit Vorteil in jedem von zwei auf den gegenüberliegenden Seiten vorgesehenen peripheren Zuführbereichen 18 für die Anschlussleiter 4 einen Fixiersteg 20 aufweisen, der Halteschlitze 22 zur fixierenden Aufnahme der Anschlussleiter 4 aufweist. In bevorzugter Ausgestaltung kann jeder Fixiersteg 20 zwischen zwei Punkten des äußeren Umfangs der Schaltscheibe 6 bogenförmig über die Oberfläche der Schaltscheibe 6 verlaufen. Dadurch begrenzt der Fixiersteg 20 den Leiter-Zuführbereich 18. Die Anschlussleiter 4 können entsprechend ihrer gewünschten Verlaufsrichtungen in die Halteschlitze 22 des Fixierstegs 20 eingelegt werden, siehe insbesondere Fig. 4 und 5, und die Anschlussleiter 4 können dann weiter über die Scheibenfläche - gegebenenfalls durch Halteaufnahmen 16 - bis zu den jeweiligen Kontakthalterungen 10 geführt werden.

Bevorzugt ist die Schaltscheibe 6 als einstückiges Formteil aus einem elektrisch isolierenden Kunststoff ausgebildet.

In weiterer vorteilhafter Ausgestaltung ist ein kappenartiges, die Schaltscheibe 6 überdeckendes Abdeckteil 24 vorgesehen, siehe Fig. 6 bis 8. Hierbei ist es zweckmäßig, wenn die Schaltscheibe 6 innerhalb des Abdeckteils 24 insbesondere über Rastmittel 26 fixiert ist, siehe dazu Fig. 8. Zweckmäßig kann die Schaltscheibe 6 auf einfache Weise in das Abdeckteil 24 eingesetzt werden, bis die Rastmittel 26 in Form von federelastischen Rastansätzen die Schaltscheibe 6 am Außenrand rastend hintergreifen. Die Schaltscheibe 6 kann dann gemeinsam mit dem Abdeckteil 24 auf den Stator 2 axial aufgesetzt werden, wobei die Kontaktelemente 12 und die Gegenkontakte 14 zusammengeführt werden. Dazu ist es zweckmäßig, wenn die Schaltscheibe 6 und das Abdeckteil 24 in seinem Inneren zusammenwirkende Positionierelemente (in den Zeichnungen nicht erkennbar) zur relativen Ausrichtung der Drehstellung der Schaltscheibe 6 innerhalb des Abdeckteils 24 aufweisen, um zu erreichen, dass bei der Montage des Abdeckteils 24 durch Aufsetzen auf den Stator 2 die in den Kontakthalterungen 10 sitzenden Kontaktelemente 12 genau axial fluchtend zu den zugehörigen Stator-Gegenkontakten 14 positioniert sind und dadurch die Steckverbindungen korrekt und ungehindert zusammengefügt werden können. Abschließend wird das Abdeckteil 24 an dem Stator 2 befestigt, und zwar insbesondere über randliche, über den Umfang verteilte Verschraubungen, indem nicht dargestellte Montageschrauben durch Montagelöcher 28 des Abdeckteils 24 hindurch in Schraublöcher 30 des Stators 2 eingeschraubt werden. Wie dargestellt kann hierbei die Schaltscheibe 6 randliche Ausnehmungen 31 im Bereich der Schraubverbindungen aufweisen, um die Schrauben axial durch die Montagelöcher 28 und an der Schaltscheibe 6 vorbei in die Stator-Schraublöcher 30 einführen zu können. Die Schaltscheibe 6 sitzt dann zwischen dem Abdeckteil 24 und dem Stator 2, siehe Fig. 8. Vorzugsweise kann der äußere Umfangsrand des Abdeckteils 24 über eine Ringdichtung gegen den Stator 2 abgedichtet werden.

In Verbindung mit dem Abdeckteil 24 ist es weiterhin vorteilhaft, wenn die Schaltscheibe 6 auf beiden Seiten jeweils einen zentrischen, rohrartigen, axial vorstehenden Ansatz 32 aufweist. Wie sich aus Fig. 8 ergibt, greift im montierten Zustand einer der beiden rohrartigen Ansätze 32 in eine koaxiale Ringnut des Abdeckteils 24 ein, während der andere, axial gegenüberliegende rohrartige Ansatz 32 in einen Lagerbereich des Stators 2 eingreift.

In den in Fig. 6 bis 8 dargestellten, bevorzugten Ausführungen weist das Abdeckteil 24 auf seiner von der Schaltscheibe 6 wegweisenden Außenseite einen axialen, zentrischen Steckansatz 34 zum Einstecken in ein elastisches Dämpferelement 36 auf. Hierbei weist der Steckansatz 34 einen von der Kreisform abweichenden, wie dargestellt beispielsweise sternartigen Außenquerschnitt auf, und das Dämpferelement 36 weist eine korrespondierende, im Querschnitt angepasste Aufnahmeöffnung 38 für den Steckansatz 34 auf. Durch diese bevorzugte Ausgestaltung wird erreicht, dass zwischen dem Steckansatz 34 und dem Dämpferelement 36 in Rotationsrichtung des Elektromotors ein Formschluss zur Drehmomentaufnahme gewährleistet ist. Der jeweilige Stator 2 wird über das Abdeckteil 24, dessen Steckansatz 34 und das Dämpferelement 36 in einer nicht dargestellten ortsfesten Halterung abgestützt, wozu das Dämpferelement 36 in eine geeignete Aufnahme der Halterung eingesetzt wird. Dazu weist das Dämpferelement 36 auch im Bereich seines äußeren Umfangs einen von der Kreisform abweichenden, wie dargestellt beispielsweise sechseckigen Querschnitt zur Drehmomentaufnahme auf.

Das Abdeckteil 24 ist zusammen mit seinem Steckansatz 34 bevorzugt einstückig insbesondere als Kunststoff-Formteil ausgebildet.

Abschließend sei erwähnt, dass das Abdeckteil 24 eine Durchführöffnung 40 für die Anschlussleiter 4, insbesondere für eine die Anschlussleiter 4 gemeinsam im Durchführungsbereich als Dichtung umschließende elastische Leitertülle 42 aufweist, siehe Fig. 6 bis 8. Zudem können die Anschlussleiter 4 in ihrem Bereich zwischen dem Zuführbereich 18 der Schaltscheibe 6 und äußeren Anschlusskontakten 44 gemeinsam von einer schlauchartigen Leiterhülle 46 umschlossen sein.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Verschaltungseinrichtung (1) zum elektrischen Verbinden von Wicklungsdrahtenden eines Stators (2) eines Elektromotors mit äußeren Anschlussleitern (4), bestehend aus einer zu einer Motorachse (8) senkrecht auf einer Stirnseite des Stators (2) anzuordnenden Schaltscheibe (6) mit Kontakthalterungen (10) für elektrische Kontaktelemente (12), wobei die Kontaktelemente (12) einerseits mit den Anschlussleitern (4) verbunden oder verbindbar sind sowie andererseits durch Aufsetzen der Schaltscheibe (6) auf den Stator (2) mit an dem Stator (2) angeordneten und mit den Wicklungsdrahtenden verbundenen Gegenkontakten (14) zusammensteckbar sind,
**dadurch gekennzeichnet, dass** die Schaltscheibe (6) mindestens zwei hinsichtlich ihrer Anordnung auf der Fläche der Schaltscheibe (6) verschiedene Gruppen (A, B) von Kontakthalterungen (10) derart aufweist, dass die Schaltscheibe (6) mit in die Kontakthalterungen (10) einer ersten Gruppe (A) eingesetzten Kontaktelementen (12) auf einen ersten Stator-Typ (2a) und mit in die Kontakthalterungen (10) einer zweiten Gruppe (B) eingesetzten Kontaktelementen (12) auf einen zweiten Stator-Typ (2b) zur Kontaktierung der jeweiligen Gegenkontakte (14) des Stators (2a; 2b) aufsetzbar ist.

2. Verschaltungseinrichtung nach Anspruch 1,
**dadurch gekennzeichnet, dass** jede Kontakthalterung (10) auf einer Seite der Schaltscheibe (6) eine Halteaufnahme zum fixierten Einsetzen des jeweiligen Kontaktelementes (12) und auf der anderen, gegenüberliegenden Seite eine Durchführöffnung für den zugehörigen Stator-Gegenkontakt (14) aufweist.

3. Verschaltungseinrichtung nach Anspruch 1 oder 2,
**dadurch gekennzeichnet, dass** die Kontakthalterungen (10) der zwei Gruppen (A, B) derart axial umgekehrt an der Schaltscheibe (6) gebildet sind, dass die Schaltscheibe (6) durch entsprechendes Wenden und mit der jeweiligen Kontakt-Bestückung in einer ihrer zwei möglichen, zur Motorachse (8) senkrechten Ausrichtungen auf den jeweiligen Stator-Typ (2a oder 2b) und dessen Gegenkontakte (14) aufsetzbar ist.

4. Verschaltungseinrichtung nach einem der Ansprüche 1 bis 3,
**dadurch gekennzeichnet, dass** die Kontaktelemente (12) mit den Anschlussleitern (4) elektrisch fest verbunden, insbesondere vercrimpt sind.

5. Verschaltungseinrichtung nach einem der Ansprüche 1 bis 4,
**dadurch gekennzeichnet, dass** die Schaltscheibe (6) Halteaufnahmen (16) zum fixierenden Einlegen der Anschlussleiter (4) in ihrem Verlauf zwischen einem gemeinsamen peripheren Zuführbereich (18) und den die jeweiligen Kontaktelemente(12) aufnehmenden Kontakthalterungen (10) aufweist.

6. Verschaltungseinrichtung nach einem der Ansprüche 1 bis 5,
**dadurch gekennzeichnet, dass** die Schaltscheibe (6) in jedem von zwei auf den gegenüberliegenden Seiten vorgesehenen peripheren Zuführbereichen (18) für die Anschlussleiter (4) einen Fixiersteg (20) aufweist, der Halteschlitze (22) zum fixierenden Einlegen der Anschlussleiter (4) aufweist.

7. Verschaltungseinrichtung nach einem der Ansprüche 1 bis 6,
**dadurch gekennzeichnet, dass** jeder Fixiersteg (20) zwischen zwei Punkten des äußeren Umfangs der Schaltscheibe (6) bogenförmig über die Oberfläche der Schaltscheibe (6) verläuft.

8. Verschaltungseinrichtung nach einem der Ansprüche 1 bis 7,
**dadurch gekennzeichnet, dass** die Schaltscheibe (6) auf beiden Seiten jeweils einen zentrischen, rohrartigen, axial vorstehenden Ansatz (32) aufweist.

9. Verschaltungseinrichtung nach einem der Ansprüche 1 bis 8,
**dadurch gekennzeichnet, dass** die Schaltscheibe (6) als einstückiges Kunststoff-Formteil ausgebildet ist.

10. Verschaltungseinrichtung nach einem der Ansprüche 1 bis 9,
**gekennzeichnet durch** ein kappenartiges, die Schaltscheibe (6) überdeckendes Abdeckteil (24).

11. Verschaltungseinrichtung nach Anspruch 10,
**dadurch gekennzeichnet, dass** die Schaltscheibe (6) innerhalb des Abdeckteils (24) insbesondere über Rastmittel (26) fixiert ist.

12. Verschaltungseinrichtung nach Anspruch 10 oder 11,
**dadurch gekennzeichnet, dass** das Abdeckteil (24) insbesondere über randliche, über den Umfang verteilte Verschraubungen an dem jeweiligen Stator (2) befestigbar ist.

13. Verschaltungseinrichtung nach einem der Ansprüche 10 bis 12,
**dadurch gekennzeichnet, dass** das Abdeckteil (24) auf seiner von der Schaltscheibe (6) wegweisenden Außenseite einen axialen, zentrischen Steckansatz (34) zum Einstecken in eine im Querschnitt angepasste Aufnahmeöffnung (38) eines elastischen Dämpferelementes (36) aufweist.

14. Verschaltungseinrichtung nach Anspruch 13,
**dadurch gekennzeichnet, dass** der Steckansatz (34) einen derart von der Kreisform abweichenden, beispielsweise sternartigen Außenquerschnitt aufweist, dass zwischen dem Steckansatz (34) und dem Dämpferelement (36) in Drehrichtung ein Formschluss zur Drehmomentaufnahme gewährleistet ist.

15. Verschaltungseinrichtung nach Anspruch 13 oder 14,
**dadurch gekennzeichnet, dass** das Abdeckteil (24) mit dem Steckansatz (34) einstückig insbesondere als Kunststoff-Formteil ausgebildet ist.

16. Verschaltungseinrichtung nach einem der Ansprüche 10 bis 15,
**dadurch gekennzeichnet, dass** das Abdeckteil (24) eine Durchführöffnung (40) für die Anschlussleiter (4), insbesondere für eine die Anschlussleiter (4) im Durchführungsbereich umschließende elastische Leitertülle (42) aufweist.

17. Stator (2) für einen Elektromotor,
**gekennzeichnet durch** eine Verschaltungseinrichtung (1) nach einem der Ansprüche 1 bis 16.

18. Elektromotor mit einem Rotor und einem Stator (2), insbesondere in einer Ausführung als Außenläufermotor,
**gekennzeichnet durch** eine Verschaltungseinrichtung (1) nach einem der Ansprüche 1 bis 16.

## Claims

1. Connecting device (1) for electrically linking coil wire ends of a stator (2) of an electric motor with external connection conductors (4), consisting of a switching disc (6) with contact supports (10) for electrical contact elements (12), to be arranged perpendicular to a motor axis (8) on an end face of the stator (2), wherein the contact elements (12) are connected or connectable on the one hand with the connection conductors (4) and on the other hand are pluggable together, by placing the switching disc (6) on the stator (2), with on the stator (2) arranged and with to the coil wire ends connected counter contacts (14),
**characterized in that** the switching disc (6) has at least two with regard to their arrangement on the surface of the switching disc (6) different groups (A, B) of contact supports (10) such that the switching disc (6) is placeable with in the contact supports (10) of a first group (A) inserted contact elements (12) on a first stator type (2a) and with in the contact supports (10) of a second group (B) inserted contact elements (12) on a second stator type (2b) for making contact to the respective counter contacts (14) of the stator (2a; 2b).

2. Connecting device according to claim 1,
**characterized in that** every contact support (10) on a side of the switching disc (6) has a holding intake for fixed insertion of the respective contact element (12) and on the other, opposing side a bushing for the belonging stator-counter contact (14).

3. Connecting device according to claim 1 or 2,
**characterized in that** the contact supports (10) of the two groups (A, B) are formed in such a axially vice versa way on the switching disc (6), that the switching disc (6) is placeable on the respective stator-type (2a or 2b) and its counter contacts (14), by respectively turning and with the respective contact-assembly in one of its two possible, to the motor axis (8) perpendicular orientations to the respective stator type (2a or 2b).

4. Connecting device according to one of claims 1 to 3,
**characterized in that** the contact elements (12) are electrically fixed permanently with the connection conductors (4), in particular crimped together.

5. Connecting device according to one of claims 1 to 4,
**characterized in that** the switching disc (6) has holding intakes (16) for fixed inlaying of the connection conductors (4) in their course between one mutual peripheral feeding area (18) and the respective contact elements (12) holding contact supports (10).

6. Connecting device according to one of claims 1 to 5,
**characterized in that** the switching disc (6) has in each of two on the opposite sides provided peripheral feeding areas (18) for the connection conductors (4) an fixing web (20), which has holding slots (22) for fixed insertion of the connection conductors (4).

7. Connecting device according to one of claims 1 to 6,
**characterized in that** each fixing web (20) is curved between two points of the outer periphery of the switching disc (6) over the surface of the switching disc (6).

8. Connecting device according to one of claims 1 to 7,
**characterized in that** the switching disc (6) has respectively a centric, tubular, axially projecting shoulder (32) on both sides.

9. Connecting device according to one of claims 1 to 8,
**characterized in that** the switching disc (6) is formed as an integral plastic molding.

10. Connecting device according to one of claims 1 to 9,
**characterized by** a cap-like, the switching disc (6) overlapping cover member (24).

11. Connecting device according to claim 10,
**characterized in that** the switching disc (6) is fixed within the cover member (24) in particular by locking means (26).

12. Connecting device according to claim 10 or 11,
**characterized in that** the cover (24) is fastened, in particular by glands distributed on the rim over the circumference, on the respective stator (2).

13. Connecting device according to claim 10 to 12,
**characterized in that** the cover (24) has at its from the switching disc (6) away facing outside an axial, centric plug-in shoulder (34) for insertion into an in cross-section adapted receiving opening (38) of an elastic damping element (36).

14. Connecting device according to claim 13,
**characterized in that** the plug-in shoulder (34) has such a from the circular shape deviating, for example star-like, outer cross-section, that between the plug-in shoulder (34) and the damping element (36) in the direction of rotation, a positive connection for absorbing torque is ensured.

15. Connecting device according to claim 13 or 14,
**characterized in that** the cover (24) with the plug-in shoulder (34) is formed integrally in particular as a plastic molding.

16. Connecting device according to one of claims 10 to 15,
**characterized in that** the cover (24) has a through-opening (40) for the connection conductor (4), in particular for a conductor nozzle (42) enclosing the connection conductors (4) in the lead-through region.

17. Stator (2) for an electric motor,
**characterized by** a connecting device (1) according to one of claims 1 to 16.

18. Electric motor with a rotor and a stator (2), particularly in an embodiment as an external rotor motor, **characterized by** a connecting device (1) according to one of claims 1 to 16.

## Revendications

1. Système de branchement (1) servant à raccorder électriquement des extrémités de fil d'enroulement d'un stator (2) d'un moteur électrique à des conducteurs de connexion (4) extérieurs, constitué d'un disque de commutation (6) à disposer de manière perpendiculaire sur un côté frontal du stator (2) par rapport à un axe de moteur (8), pourvu de supports de contact (10) pour des éléments de contact (12) électrique, dans lequel les éléments de contact (12) sont raccordés ou peuvent être raccordés d'une part aux conducteurs de connexion (4) et peuvent être emboîtés d'autre part, en posant le disque de commutation (6) sur le stator (2), avec des contacts complémentaires (14) disposés au niveau du stator (2) et reliés aux extrémités de fil d'enroulement,
**caractérisé en ce que** le disque de commutation (6) présente au moins deux groupes (A, B) de supports de contact (10) différents eu égard à leur agencement sur la surface du disque de commutation (6) de telle manière que le disque de commutation (6) peut être posé, à l'aide d'éléments de contact (12) insérés dans les supports de contact (10) d'un premier groupe (A), sur un premier type de stator (2a) et, à l'aide d'éléments de contact (12) insérés dans les supports de contact (10) d'un deuxième groupe (B), sur un deuxième type de stator (2b) aux fins de l'établissement d'un contact avec les contacts complémentaires (14) respectifs du stator (2a ; 2b).

2. Système de branchement selon la revendication 1,
**caractérisé en ce que** chaque support de contact (10) présente, sur un côté du disque de commutation (6), un logement de maintien servant à insérer de manière bloquée l'élément de contact (12) respectif et, sur l'autre côté opposé, une ouverture de passage pour le contact complémentaire de stator (14) associé.

3. Système de branchement selon la revendication 1 ou 2,
**caractérisé en ce que** les supports de contact (10) des deux groupes (A, B) sont formées au niveau du disque de commutation (6) de manière axialement inversée de telle manière que le disque de commutation (6) peut être placé, par un retournement correspondant et à l'aide de l'équipement de contact respectif, dans l'une de ses deux orientations possibles perpendiculaires par rapport à l'axe de moteur (8), sur le type de stator (2a ou 2b) respectif et sur les contacts complémentaires (14) de ce dernier.

4. Système de branchement selon l'une quelconque des revendications 1 à 3,
**caractérisé en ce que** les éléments de contact (12) sont raccordés de manière solidaire électriquement, en particulier sont raccordés par sertissage, aux conducteurs de connexion (4),

5. Système de branchement selon l'une quelconque des revendications 1 à 4,
**caractérisé en ce que** le disque de commutation (6) présente des logements de maintien (16) servant à introduire par blocage les conducteurs de connexion (4) selon leur profil entre une zone d'amenée (18) périphérique commune et les supports de contact (10) logeant les éléments de contact (12) respectifs.

6. Système de branchement selon l'une quelconque des revendications 1 à 5,
**caractérisé en ce que** le disque de commutation (6) présente, dans chacune des deux zones d'amenée (18) périphériques prévues sur les côtés opposés, pour les conducteurs de connexion (4), une nervure de blocage (20), qui présente des entailles de maintien (22) servant à introduire par blocage les conducteurs de connexion (4).

7. Système de branchement selon l'une quelconque des revendications 1 à 6,
**caractérisé en ce que** chaque nervure de blocage (20) s'étend entre deux points de la circonférence extérieure du disque de commutation (6) de manière à présenter une forme d'arc au-dessus de la surface du disque de commutation (6).

8. Système de branchement selon l'une quelconque des revendications 1 à 7,
**caractérisé en ce que** le disque de commutation (6) présente sur deux côtés respectivement un épaulement (32) central, de type tubulaire, faisant saillie de manière axiale.

9. Système de branchement selon l'une quelconque des revendications 1 à 8,
**caractérisé en ce que** le disque de commutation (6) est réalisé sous la forme d'une partie moulée en plastique d'un seul tenant.

10. Dispositif de commutation selon l'une quelconque des revendications 1 à 9,
**caractérisé par** une partie de recouvrement (24) de type capuchon recouvrant le disque de commutation (6).

11. Système de branchement selon la revendication 10, **caractérisé en ce que** le disque de commutation (6) est biloqué à l'intérieur de la partie de recouvrement (24) en particulier par l'intermédiaire de moyens d'enclenchement (26).

12. Système de branchement selon la revendication 10 ou 11,
**caractérisé en ce que** la partie de recouvrement (24) peut être fixée au niveau du stator (2) respectif en particulier par l'intermédiaire de systèmes de vissage en bordure répartis sur la circonférence.

13. Système de branchement selon l'une quelconque des revendications 10 à 12,
**caractérisé en ce que** la partie de recouvrement (24) présente, sur son coté extérieur s'éloignant du disque de commutation (6), un épaulement d'enfichage (34) axial central destiné à être enfiché dans une ouverture de logement (38), adaptée dans la section transversale, d'un élément d'amortissement (36) élastique.

14. Système de branchement selon la revendication 13,
**caractérisé en ce que** l'épaulement d'enfichage (34) présente une section transversale extérieure divergeant de la forme circulaire, par exemple de type étoile, **en ce qu'**une complémentarité de forme servant à recevoir le couple de rotation est garantie entre l'épaulement d'enfichage (34) et l'élément d'amortissement (36) dans la direction de rotation.

15. Système de branchement selon la revendication 13 ou 14,
**caractérisé en ce que** la partie de recouvrement (24) est réalisée d'un seul tenant avec l'épaulement d'enfichage (34) en particulier sous la forme d'une partie moulée en plastique.

16. Système de branchement selon l'une quelconque des revendications 10 à 15,
**caractérisé en ce que** la partie de recouvrement (24) présente une ouverture de passage (40) pour les conducteurs de connexion (4), en particulier pour une douille conductrice (42) élastique entourant les conducteurs de connexion (4) dans la zone de passage.

17. Stator (2) pour un moteur électrique,
**caractérisé par** un système de branchement (1) selon l'une quelconque des revendications 1 à 16.

18. Moteur électrique comprenant un rotor et un stator (2), en particulier selon une réalisation sous la forme d'un moteur à induit extérieur,
**caractérisé par** un système de branchement (1) selon l'une quelconque des revendications 1 à 16.
